# EUROPÄISCHE PATENTSCHRIFT

(11) **EP 3 234 971 B1**
(45) Veröffentlichungstag und Bekanntmachung des Hinweises auf die Patenterteilung: **08.01.2020**
(21) Anmeldenummer: 15801397.9
(22) Anmeldetag: 25.11.2015
(51) Int. Cl.: H01H 1/36, H01H 1/60, H01H 9/00

(54) **VERFAHREN ZUM REINIGEN EINES LASTSTUFENSCHALTERS UND LASTSTUFENSCHALTER**
METHOD FOR CLEANING AN ON-LOAD TAP CHANGER, AND ON-LOAD TAP CHANGER
PROCÉDÉ DE NETTOYAGE D'UN CHANGEUR DE PRISES EN CHARGE ET CHANGEUR DE PRISES EN CHARGE

(30) Priorität: 16.12.2014 DE 102014118715
(43) Veröffentlichungstag der Anmeldung: 25.10.2017
(73) Patentinhaber: Maschinenfabrik Reinhausen GmbH, 93059 Regensburg (DE)
(72) Erfinder: ZERR, Eduard, 93059 Regensburg (DE); SCHMEISSER, Michael, 93059 Regensburg (DE); SCHMID, Sebastian, 93161 Sinzing (DE)
(86) Internationale Anmeldenummer: PCT/EP2015/077676
(87) Internationale Veröffentlichungsnummer: WO 2016/096356

(56) Entgegenhaltungen:
- EP-A1- 2 689 441
- DE-U1- 9 216 746
- US-A1- 2006 028 185

## Beschreibung

Die Erfindung betrifft ein Verfahren zum Reinigen eines Laststufenschalters in einem Regeltransformator und einen Laststufenschalter für einen Regeltransformator.

DE 2 815 684 A1 beschreibt einen Anzapfungswechsler für Transformatoren, der einen Anzapfungswählschalter mit einer Mehrzahl von festen Kontakten zur Verbindung mit einer angezapften Regelwicklung des Transformators, einen beweglichen Kontakt, um sukzessive die festen Kontakte anzuwählen, und einen Umschalter umfasst, um die Wicklungsverbindungen umzuschalten, wenn ein vorgegebener fester Kontakt ausgewählt worden ist. Dieser Anzapfungswechsler umfasst eine Störeinrichtung, die betätigbar ist, wenn die anderen Kontakte angewählt werden, um zwischen den in Eingriff befindlichen Kontakten des Umschalters eine Relativbewegung zu erzeugen, ohne den Umschalter umzuschalten.

DE 2 815 684 A1 erläutert zudem folgendes: Der Transformator kann über lange Perioden arbeiten, ohne dass ein größerer Regelbereich erforderlich ist, weshalb demzufolge der Umschalter nur selten betätigt wird. Während dieser langen Perioden führt der Umschalter Strom und es tritt eine Oxidation auf, wodurch der Kontaktwiderstand zunimmt. In solchen Fällen kann durch die entstehende Wärme der Schalter zerstört werden. Während jedes Wechsels der Anzapfung dreht sich ein Ritzel um 90°. Ein exzentrisch an diesem montierter Arm erteilt dem Umschalter eine leichte Bewegung. Diese Bewegung reicht nicht aus, um den Umschalter zu betätigen, d.h. die Kontakte umzuschalten, sie ist jedoch ausreichend, um die Kontakte zu säubern. Der genannte Umschalter kann irgendein stromführender Schalter sein, von dem angenommen wird, dass er in der Anlage nicht häufig betätigt wird. Gewöhnlich ist der Schalter ein Reversierschalter, um den Richtungssinn der Regelwicklung zur Hauptwicklung umzukehren, oder ein Grob-Fein-Schalter, um eine zusätzliche Wicklung zwischen die Regelwicklung und die Hauptwicklung zu schalten. Durch die beschriebene Vorrichtung werden die Kontakte des Umschalters während jedes Wechsels der Anzapfung gestört bzw. beeinflusst, wobei dies zweckmäßig aber nicht unbedingt erforderlich ist.

Diese permanente Relativbewegung führt jedoch zu einer deutlichen Verkürzung der Lebensdauer des Umschalters und insbesondere seiner Kontakte.

US 2006/028185 A1 beschreibt ein Verfahren zur Kontaktreinigung eines Laststufenschalters, um der Kohlenstoffablagerung an Kontakten vorzubeugen. Zunächst wird die aktuelle Stellung der Kontakte des Laststufenschalters erfasst und die Zeitspanne ermittelt, innerhalb welcher der Laststufenschalter bereits in dieser Stellung verharrt hat, ohne eine Schaltung vorzunehmen. Hat diese Zeitspanne einen festgesetzten Grenzwert überschritten, so wird durch die Steuerung ein Signal zur Durchführung einer Stufenschaltung ausgegeben. Der Schaltvorgang dient somit allein zum Zweck der Reinigung und erzeugt zusätzlich Spannungsschwankungen, die unerwünscht sind.

Es ist daher Aufgabe der Erfindung, ein Verfahren zum Reinigen eines Laststufenschalters zu schaffen, das unerwünschte Spannungsschwankungen vermeidet.

Diese Aufgabe wird durch die Gegenstände der unabhängigen Ansprüche gelöst. Vorteilhafte Weiterbildungen und Ausführungsformen der Erfindung sind in den abhängigen Ansprüchen beschrieben.

Die Erfindung schlägt gemäß einem ersten Aspekt ein Verfahren zum Reinigen eines Laststufenschalters in einem Regeltransformator, der insbesondere an ein Stromnetz angeschlossen ist, vor, wobei
- der Laststufenschalter wenigstens einen Bewegtkontakt und wenigstens einen Festkontakt umfasst,
- ein Schaltsignal zum Betätigen und umschalten des Laststufenschalters erzeugt wird um eine Primärspannung oder eine Sekundärspannung des Regeltransformators in einem vorbestimmten Spannungsband zu halten;
- wenigstens ein Reinigungsparameter in Abhängigkeit von dem Schaltsignal überprüft wird;
- ein Reinigungssignal in Abhängigkeit von dem Ergebnis der Überprüfung erzeugt wird;
- in Abhängigkeit von dem Reinigungssignal der Bewegtkontakt relativ zum Festkontakt reibend und/oder tangential und/oder unter ständiger Berührung bewegt wird;
- nach dem Reinigen der Laststufenschalter entsprechend dem Schaltsignal betätigt und umgeschaltet wird.

Durch die reibende und/oder tangentiale und/oder unter ständiger Berührung erfolgende Relativbewegung werden der Bewegtkontakt und der Festkontakt gereinigt.

Es kann vorgesehen sein, dass
- vor dem Überprüfen ein Schaltsignal zum Betätigen des Laststufenschalters erzeugt und insbesondere das Betätigen des Laststufenschalters ausgesetzt wird;
- das Überprüfen in Abhängigkeit von dem Schaltsignal erfolgt.

Vorzugsweise erfolgt das Überprüfen in Abhängigkeit von dem Schaltsignal, indem das Überprüfen erfolgt, sobald das Schaltsignal erzeugt ist.

Alternativ oder zusätzlich erfolgt das Überprüfen in Abhängigkeit von dem Schaltsignal, indem die Art der Überprüfung von dem Schaltsignal abhängen, wie nachfolgend näher erläutert werden wird.

Das Schaltsignal wird üblicherweise erzeugt, um den Laststufenschalter von einer ersten, aktuellen Stellung, die einem ersten Übersetzungsverhältnis des Regeltransformators entspricht, in eine zweite, gewünschte Stellung zu schalten, die einem zweiten Übersetzungsverhältnis des Regeltransformators entspricht. In einem ersten Fall kann der Bewegtkontakt beispielsweise gemäß einem entsprechenden ersten Schaltsignal in der ersten Stellung auf den Festkontakt aufgeschaltet und stromführend sein und in der zweiten Stellung auf den Festkontakt aufgeschaltet bleiben und stromlos sein. In einem zweiten Fall kann der Bewegtkontakt beispielsweise gemäß einem entsprechenden zweiten Schaltsignal in der ersten Stellung auf den Festkontakt aufgeschaltet und stromlos sein und in der zweiten Stellung auf den Festkontakt aufgeschaltet bleiben und stromführend sein. Das Überprüfen kann dann beispielsweise in dem ersten Fall derart erfolgen, dass ein Reinigungsparameter, der das erste Zeitintervall ist, überprüft wird, und in dem zweiten Fall derart, dass ein Reinigungsparameter, der das fünfte Zeitintervall ist, überprüft wird. Folglich erfolgt die Art der Überprüfung und somit das Überprüfen in Abhängigkeit von dem Schaltsignal.Das vorgeschlagene Verfahren ermöglicht eine Reinigung bei Bedarf, da das Reinigungssignal erst dann erzeugt werden kann oder wird, wenn eine Reinigung auch wirklich erforderlich ist, und die Relativbewegung in Abhängigkeit von dem Reinigungssignal erfolgt, also nicht unbedingt und zwangsläufig bei jeder Umschaltung, wie es bei dem aus DE 2 815 684 A1 bekannten Verfahren der Fall ist. Dadurch kann die Lebensdauer im Vergleich zu diesem bekannten Verfahren deutlich verlängert werden. Das vorgeschlagene Verfahren ermöglicht eine Reinigung des Laststufenschalters während des Betriebs des Regeltransformators, also wenn der Regeltransformator an ein Wechselstromnetz angeschlossen ist.

Die Relativbewegung kann nach Bedarf auf beliebige Art und Weise erfolgen, beispielsweise längs wenigstens eines vorbestimmten Pfades, der beispielsweise linear oder kreisbogenförmig oder beliebig anders geformt sein kann, und/oder mit einer vorbestimmten Geschwindigkeit, die beispielsweise konstant oder auf vorbestimmte Weise zeitabhängig veränderlich sein kann, und/oder einer vorbestimmten Andruckkraft, die beispielsweise konstant oder auf vorbestimmte Weise zeitabhängig veränderlich sein kann, und/oder einem vorbestimmten Anpressdruck, die beispielsweise konstant oder auf vorbestimmte Weise zeitabhängig veränderlich sein kann, und/oder mit einer vorbestimmten Tangentialkraft, die beispielsweise konstant oder auf vorbestimmte Weise zeitabhängig veränderlich sein kann, und/oder derart, dass der Bewegtkontakt von einer ersten Position in eine von dieser unterschiedliche zweite Position bewegt wird, oder dass der Bewegtkontakt von der ersten Position in die zweite Position und wieder zurück in die erste Position bewegt wird, oder dass der Bewegtkontakt wenigstens zweimal von der ersten Position in die zweite Position und wieder zurück bewegt wird. Dieser Pfad, diese Geschwindigkeit, diese Abdruckkraft, dieser Anpressdruck, diese Tangentialkraft und diese Positionen werden im Folgenden auch zusammenfassend als Relativbewegungsparameter bezeichnet.

Das Reinigungssignal kann nach Bedarf auf beliebige Art und Weise ausgebildet sein, beispielsweise als binäres Signal oder EIN/AUS-Signal oder als Signal mit drei oder mehr Werten. Falls das Reinigungssignal binär oder ein EIN/AUS-Signal ist, dann kann beispielsweise die Relativbewegung gestartet und ausgeführt werden, sobald es den Wert EIN erhält und/oder solange es den Wert EIN hat, und angehalten oder beendet oder nicht ausgeführt werden, sobald es den Wert AUS erhält und/oder solange es den Wert AUS hat.

Falls das Reinigungssignal ein Signal mit drei Werten ist, dann kann beispielsweise die Relativbewegung einmal oder mit einer vorbestimmten ersten Anzahl von Wiederholungen ausgeführt werden, sobald es den ersten Wert erhält, zweimal oder mit einer vorbestimmten zweiten Anzahl von Wiederholungen ausgeführt werden, sobald es den zweiten Wert erhält, und angehalten oder beendet oder nicht ausgeführt werden, sobald es den dritten Wert erhält und/oder solange es den dritten Wert hat.

Alternativ oder zusätzlich kann in diesem Fall dann beispielsweise die Relativbewegung gestartet und mit oder entsprechend einem vorbestimmten ersten Relativbewegungsparameter oder einem vorbestimmten ersten Satz von Relativbewegungsparametern, ausgeführt werden, sobald das Reinigungssignal den ersten Wert erhält und/oder solange es den ersten Wert hat, mit oder entsprechend einem vorbestimmten zweiten Relativbewegungsparameter oder einem vorbestimmten zweiten Satz von Relativbewegungsparametern ausgeführt werden, sobald es den zweiten Wert erhält und/oder solange es den zweiten Wert hat, und angehalten oder beendet oder nicht ausgeführt werden, sobald es den dritten Wert erhält und/oder solange es den dritten Wert hat.

Es ist vorgesehen,, dass
- vor dem Erzeugen des Reinigungssignals wenigstens ein Reinigungsparameter überprüft wird;
- das Erzeugen des Reinigungssignals in Abhängigkeit von dem Ergebnis der Überprüfung erfolgt.

So kann beispielsweise das Reinigungssignal erzeugt werden, sobald wenigstens einer der Reinigungsparameter einen vorbestimmten Schwellenwert erreicht oder überschreitet.

Das Überprüfen kann nach Bedarf auf beliebige Art und Weise erfolgen, beispielsweise derart, dass wenigstens zwei Reinigungsparameter überprüft werden und/oder wenigstens eine Kombination von wenigstens zwei Reinigungsparameteren überprüft wird, die beispielsweise wenigstens eine Summe und/oder wenigstens eine Differenz und/oder wenigstens ein Produkt und/oder wenigstens einen Quotienten und/oder wenigstens eine beliebige andere Funktion dieser Reinigungsparameter umfassen kann. So kann beispielsweise überprüft werden, ob ein erster Reinigungsparameter größer als ein vorbestimmter erster Schwellenwert und ein zweiter Reinigungsparameter größer als ein vorbestimmter zweiter Schwellenwert ist, oder ob der erste Reinigungsparameter gleich oder kleiner als der erste Schwellenwert und der zweite Reinigungsparameter größer als der zweite Schwellenwert ist, oder ob der erste Reinigungsparameter größer als der erste Schwellenwert und der zweite Reinigungsparameter gleich oder kleiner als der zweite Schwellenwert ist, oder ob der erste Reinigungsparameter gleich oder kleiner als der erste Schwellenwert und der zweite Reinigungsparameter gleich oder kleiner als der zweite Schwellenwert ist.

Es kann vorgesehen sein, dass
- das Reinigungssignal von wenigstens einem Reinigungsparameter abhängt.

Diese Abhängigkeit kann nach Bedarf auf beliebige Art und Weise ausgebildet sein, beispielsweise als lineare, quadratische oder exponentielle Funktion oder als Heaviside-Funktion. So kann beispielsweise das Reinigungssignal einen ersten vorbestimmten Wert erhalten, falls wenigstens einer der Reinigungsparameter größer als ein vorbestimmter Schwellenwert ist, und einen zweiten vorbestimmten Wert, falls wenigstens einer der Reinigungsparameter gleich oder kleiner als der der Schwellenwert ist.

Vorzugsweise zeigt wenigstens einer der Reinigungsparameter den tatsächlichen und/oder geschätzten Verschmutzungsgrad des Bewegtkontaktes und/oder des Festkontaktes und/oder die Notwendigkeit einer Reinigung an.

Es kann vorgesehen sein, dass
- wenigstens einer der Reinigungsparameter
   - ein erstes Zeitintervall ist, das aussagt, wie lange der Bewegtkontakt ununterbrochen stromführend ist, oder
   - ein zweites Zeitintervall ist, das aussagt, wie lange der Bewegtkontakt seit seiner letzten Reinigung stromführend ist, oder
   - ein drittes Zeitintervall ist, das aussagt, wie lange der Festkontakt ununterbrochen stromführend ist, oder
   - ein viertes Zeitintervall ist, das aussagt, wie lange der Festkontakt seit seiner letzten Reinigung stromführend ist, oder
   - ein fünftes Zeitintervall ist, das aussagt, wie lange der Bewegtkontakt ununterbrochen stromlos ist, oder
   - ein sechstes Zeitintervall ist, das aussagt, wie lange der Bewegtkontakt seit seiner letzten Reinigung stromlos ist, oder
   - ein siebentes Zeitintervall ist, das aussagt, wie lange der Festkontakt ununterbrochen stromlos ist, oder
   - ein achtes Zeitintervall ist, das aussagt, wie lange der Festkontakt seit seiner letzten Reinigung stromlos ist, oder
   - ein neuntes Zeitintervall ist, das aussagt, wie lange der Bewegtkontakt den Festkontakt ununterbrochen stromlos kontaktiert hat, oder
   - ein zehntes Zeitintervall ist, das aussagt, wie lange der Bewegtkontakt den Festkontakt nicht kontaktiert hat, oder
   - ein Widerstandswert ist, der aussagt, wie groß der elektrische Kontaktwiderstand zwischen dem Festkontakt und dem auf diesen aufgeschalteten Bewegtkontakt ist.

Der elektrische Kontaktwiderstand ist ein Maß für die elektrischen Verluste, wenn Strom durch die elektrische Kontaktfläche zwischen dem Festkontakt und dem auf diesen aufgeschalteten Bewegtkontakt fließt.

Es kann vorgesehen sein, dass
- der Laststufenschalter einen Lastumschalter und einen Feinwähler umfasst, der den Bewegtkontakt und den Festkontakt umfasst;
- das Betätigen des Laststufenschalters derart erfolgt, dass zuerst der Bewegtkontakt auf den Festkontakt aufgeschaltet wird oder auf dem Festkontakt aufgeschaltet bleibt, und dass dann der Lastumschalter betätigt wird.

Es kann vorgesehen sein, dass
- der Bewegtkontakt und/oder der Festkontakt Teil eines Lastwählers, Feinwählers, Grobstufenwählers, Wenders oder Vorwählers in dem Laststufenschalter ist.

Es kann vorgesehen sein, dass
- der Festkontakt als Stufenkontakt oder Ableitkontakt ausgebildet ist.

Es kann vorgesehen sein, dass
- während der reibenden Bewegung der Bewegtkontakt nicht vom Festkontakt gelöst wird.

Es kann vorgesehen sein, dass
- vor und/oder nach der reibenden Bewegung der Bewegtkontakt vom Festkontakt mindestens einmal gelöst wird.

Es kann vorgesehen sein, dass
- die reibende Bewegung derart ausgeführt wird, dass sich der Bewegtkontakt vom Festkontakt mindestens einmal löst.

Es kann vorgesehen sein, dass
- der Regeltransformator an ein Wechselstromnetz angeschlossen ist; und/oder
- während des Verfahrens oder während des Reinigens der Regeltransformator nicht von einem Wechselstromnetz getrennt wird oder an ein Wechselstromnetz angeschlossen ist oder bleibt.

Das Verfahren kann also beispielsweise während des Betriebs des Regeltransformators durchgeführt werden.

Die Erfindung schlägt gemäß dem Anspruch 11 einen Laststufenschalter in einem Regeltransformator, der insbesondere an ein Stromnetz angeschlossen ist, vor, umfassend
- einen Bewegtkontakt und einen Festkontakt;
- einen Kontaktantrieb, der an den Bewegtkontakt gekoppelt ist;
- eine Steuereinrichtung, die mit dem Kontaktantrieb verbunden ist und derart ausgebildet ist, dass sie
   - ein Reinigungssignal erzeugen und an den Kontaktantrieb senden kann;
   wobei
- der Kontaktantrieb derart ausgebildet ist, dass er
   - in Abhängigkeit von dem Reinigungssignal den Bewegtkontakt relativ zum Festkontakt reibend bewegen kann.

Es ist vorgesehen, dass
- die Steuereinrichtung derart ausgebildet ist, dass sie
   - vor dem Erzeugen des Reinigungssignals wenigstens einen Reinigungsparameter überprüfen kann;
   - das Erzeugen des Reinigungssignals in Abhängigkeit von dem Ergebnis der Überprüfung durchführen kann.

Es kann vorgesehen sein, dass
- die Steuereinrichtung derart ausgebildet ist, dass sie
   - das Reinigungssignal in Abhängigkeit von wenigstens einem der Reinigungsparameter erzeugen kann.

Es kann vorgesehen sein, dass
- wenigstens einer der Reinigungsparameter
   - ein erstes Zeitintervall ist, das aussagt, wie lange der Bewegtkontakt ununterbrochen stromführend ist, oder
   - ein zweites Zeitintervall ist, das aussagt, wie lange der Bewegtkontakt seit seiner letzten Reinigung stromführend ist, oder
   - ein drittes Zeitintervall ist, das aussagt, wie lange der Festkontakt ununterbrochen stromführend ist, oder
   - ein viertes Zeitintervall ist, das aussagt, wie lange der Festkontakt seit seiner letzten Reinigung stromführend ist, oder
   - ein fünftes Zeitintervall ist, das aussagt, wie lange der Bewegtkontakt ununterbrochen stromlos ist, oder
   - ein sechstes Zeitintervall ist, das aussagt, wie lange der Bewegtkontakt seit seiner letzten Reinigung stromlos ist, oder
   - ein siebentes Zeitintervall ist, das aussagt, wie lange der Festkontakt ununterbrochen stromlos ist, oder
   - ein achtes Zeitintervall ist, das aussagt, wie lange der Festkontakt seit seiner letzten Reinigung stromlos ist, oder
   - ein neuntes Zeitintervall ist, das aussagt, wie lange der Bewegtkontakt den Festkontakt ununterbrochen stromlos kontaktiert hat, oder
   - ein zehntes Zeitintervall ist, das aussagt, wie lange der Bewegtkontakt den Festkontakt nicht kontaktiert hat, oder
   - ein Widerstandswert ist, der aussagt, wie groß der elektrische Kontaktwiderstand zwischen dem Festkontakt und dem auf diesen aufgeschalteten Bewegtkontakt ist.

Es ist vorgesehen, dass
- die Steuereinrichtung derart ausgebildet ist, dass sie
   - vor dem Überprüfen ein Schaltsignal zum Betätigen des Laststufenschalters erzeugen kann;
   - das Überprüfen in Abhängigkeit von dem Schaltsignal durchführen kann;
   - nach dem Reinigen den Laststufenschalter in Abhängigkeit von dem Schaltsignal betätigen kann.

Vorzugsweise wird nach dem Erzeugen des Schaltsignals das Betätigen des Laststufenschalters solange ausgesetzt, bis die Reinigung beendet ist.

Es kann vorgesehen sein, dass jeder der vorgeschlagenen Laststufenschalter umfasst
- einen Lastumschalter und einen Feinwähler, der den Bewegtkontakt und den Festkontakt umfasst;
   wobei
- die Steuereinrichtung derart ausgebildet ist, dass sie zum Betätigen des Laststufenschalters
   - zuerst den Kontaktantrieb derart ansteuert, dass dieser den Bewegtkontakt auf den Festkontakt aufschaltet oder auf dem Festkontakt aufgeschaltet lässt,
   - und dann den Lastumschalter derart ansteuert, dass dieser umschaltet.

Vorzugsweise ist der Kontaktantrieb derart ausgebildet ist, dass er
- den Bewegtkontakt auf den Festkontakt aufschalten oder auf dem Festkontakt aufgeschaltet lassen kann.

Es kann vorgesehen sein, dass
- der Bewegtontakt und/oder der Festkontakt Teil eines Lastwählers, Feinwählers, Grobstufenwählers, Wenders oder Vorwählers in dem Laststufenschalter ist.

Es kann vorgesehen sein, dass
- der Festkontakt als Stufenkontakt oder Ableitkontakt ausgebildet ist.

Es kann vorgesehen sein, dass
- der Kontaktantrieb derart ausgebildet ist, dass er
   - während der reibenden Bewegung den Bewegtkontakt nicht vom Festkontakt lösen kann; und/oder
   - vor und/oder nach der reibenden Bewegung den Bewegtkontakt vom Festkontakt mindestens einmal lösen kann.

Es kann vorgesehen sein, dass
- der Kontaktantrieb derart ausgebildet ist, dass er
   - die reibende Bewegung derart ausführen kann, dass sich der Bewegtkontakt vom Festkontakt mindestens einmal löst.

Die Ausführungen und Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in
- FIG. 1: eine erste Ausführungsform eines Laststufenschalters in einem Regeltransformator;
- FIG. 2: eine zweite Ausführungsform des Laststufenschalters in dem Regeltransformator;
- FIG. 3: eine bevorzugte Ausführungsform eines Feinwählers mit Festkontakten und Bewegtkontakten gemäß einer ersten Ausführungsform;
- FIG. 4: eine bevorzugte Ausführungsform eines Vorwählers mit Festkontakten und Bewegtkontakten gemäß einer zweiten Ausführungsform;
- FIG. 5: eine bevorzugte Ausführungsform eines Lastwählers mit Festkontakten und Bewegtkontakten gemäß einer dritten Ausführungsform;
- FIG. 6: eine vierte Ausführungsform eines Festkontaktes und eines Bewegtkontaktes;
- FIG. 7: eine erste Ausführungsform eines Verfahrens zum Reinigen des Laststufenschalters;
- FIG. 8: ein Beispiel eines Verfahrens;
- FIG. 9: ein Beispiel eines Verfahrens.

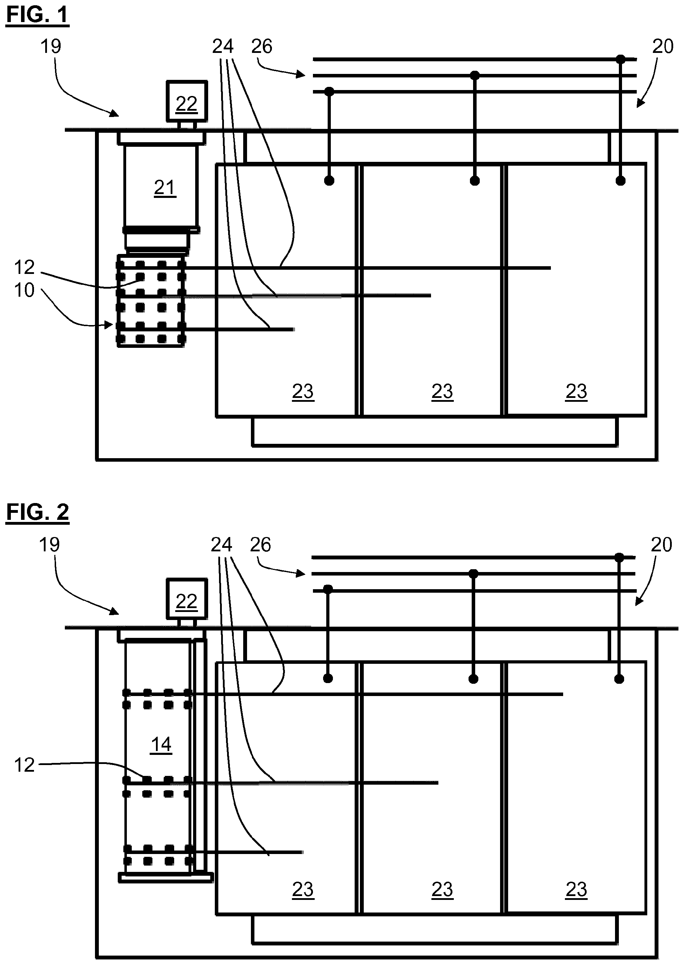

In FIG. 1 ist eine erste Ausführungsform eines Laststufenschalters 19 in einem Regeltransformator 20, der an ein Wechselstromnetz 26 angeschlossen ist, schematisch dargestellt.

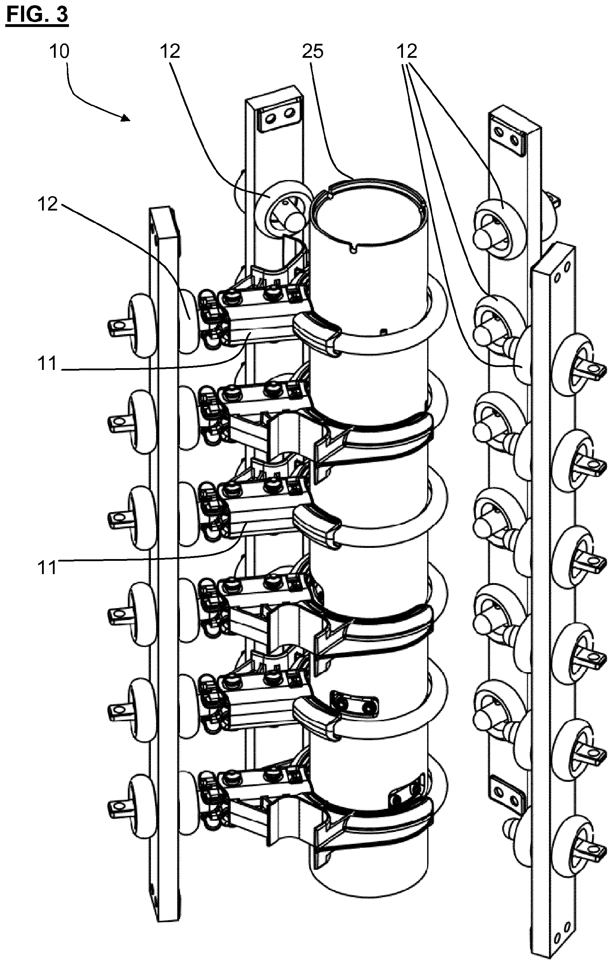

Der Laststufenschalter 19 umfasst bei dieser Ausführungsform beispielhaft einen Feinwähler 10, einen Lastumschalter 21 und eine Antriebseinrichtung, die einen Motor 22 und einen Antriebsstrang (nicht dargestellt) mit einer Schaltwelle 25 (FIG. 3, FIG. 4, FIG. 5) umfasst. Der Regeltransformator 20 ist beispielhaft dreiphasig ausgelegt und umfasst für jede Phase eine Stammwicklung (nicht dargestellt) und eine Regelwicklung 23 mit mehreren Anzapfungen (nicht dargestellt). Der Feinwähler 10 umfasst mehrere Bewegtkontakte 11 (FIG. 3) und mehrere Festkontakte 12, von denen jeder mit einer Anzapfung elektrisch leitend verbunden ist, was in FIG. 1 schematisch durch die Leitungen 24 angedeutet ist. Der Antriebsstrang ist einerseits an den Motor 22 und andererseits an den Feinwähler 10 und den Lastumschalter 21 gekoppelt.

In FIG. 2 ist eine zweite Ausführungsform des Laststufenschalters 19 in dem Regeltransformator 20 schematisch dargestellt. Diese Ausführungsform ähnelt der ersten Ausführungsform, sodass im Folgenden vor Allem die Unterschiede näher erläutert werden.

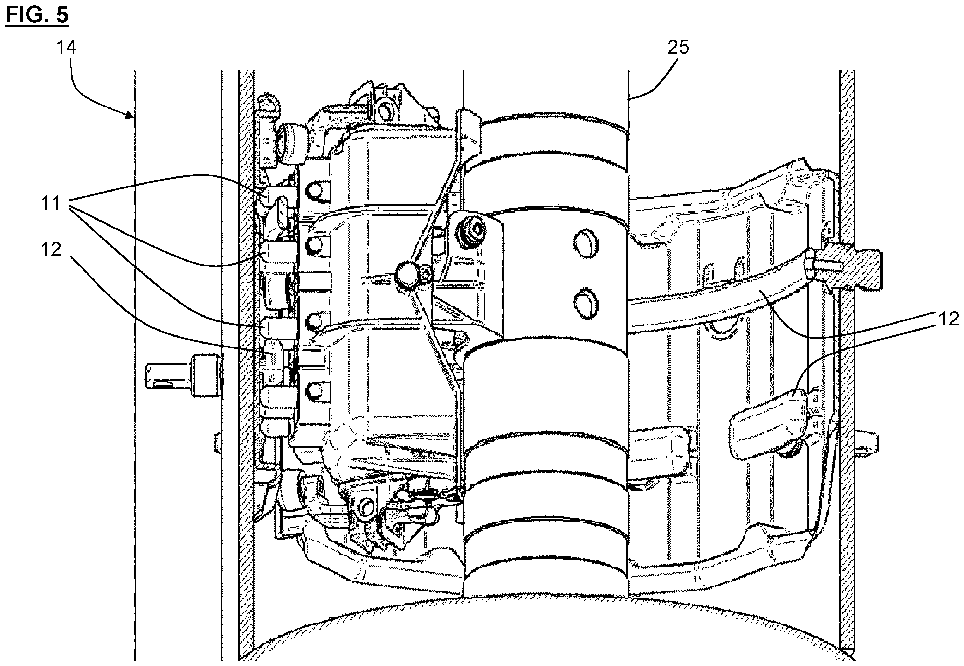

Der Laststufenschalter 19 umfasst bei dieser Ausführungsform beispielhaft anstelle von Feinwähler 10 und Lastumschalter 21 einen Lastwähler 14. Der Antriebsstrang ist dementsprechend an den Lastwähler 14 gekoppelt. Der Lastwähler 14 umfasst mehrere Bewegtkontakte 11 (FIG. 5) und mehrere Festkontakte 12, von denen jeder mit einer Anzapfung elektrisch leitend verbunden ist, was in FIG. 2 schematisch durch die Leitungen 24 angedeutet ist.

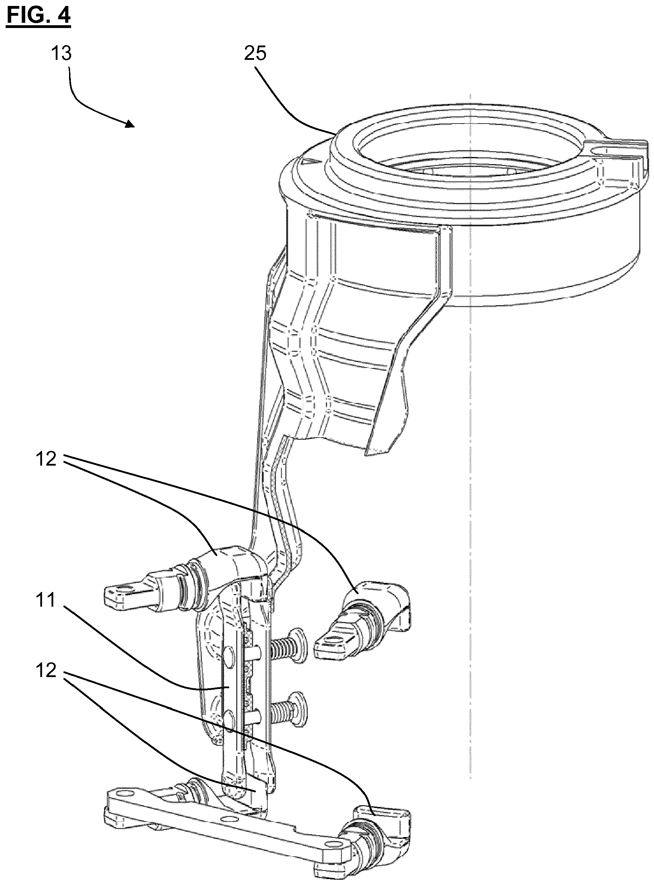

Jeder Laststufenschalter 19 kann bei Bedarf einen Vorwähler 13 (FIG. 4) umfassen, der an den Antriebsstrang gekoppelt ist. Der Vorwähler 13 kann beispielsweise als Wender, der jede Stammwicklung wahlweise mit einem der Enden der jeweiligen Regelwicklung 23 verbindet, oder als Grobstufenwähler ausgebildet sein, der einen Teil jeder Stammwicklung wahlweise entweder zum Rest der jeweiligen Stammwicklung zuschaltet oder überbrückt.

In FIG. 3 ist eine bevorzugte Ausführungsform des Feinwählers 10 schematisch dargestellt.

Der Feinwähler 10 umfasst bei dieser Ausführungsform beispielhaft mehrere an einer Schaltwelle 25 befestigte Bewegtkontakte 11, die gemäß einer ersten Ausführungsform ausgebildet sind, und mehrere Festkontakte 12, die gemäß einer ersten Ausführungsform ausgebildet sind und von denen jeder mit einer Anzapfung elektrisch leitend verbunden ist.

Der Feinwähler 10 dient zum leistungslosen oder stromlosen oder lastfreien Vorwählen eines der Festkontakte 12, der mit derjenigen Anzapfung elektrisch leitend verbunden ist, auf die umgeschaltet werden soll. Der Lastumschalter 21 dient zum eigentlichen, nach dem Vorwählen stattfindenden Umschalten unter Last von dem aktuell stromführenden, mit einem Bewegtkontakt 11 beschalteten Festkontakt 12 auf den vorgewählten Festkontakt 12, auf den umgeschaltet werden soll.

Vor dem Umschalten wird also beim Vorwählen ein Bewegtkontakt 11 auf einen Festkontakt 12 aufgeschaltet. Dabei wird bevorzugt vor dem Vorwählen ein Reinigungssignal in Abhängigkeit von wenigstens einem Reinigungsparameter erzeugt und in Abhängigkeit von dem Reinigungssignal eine Reinigung des aufzuschaltenden, vorgewählten Festkontaktes 12 durchgeführt. So kann beispielsweise die Schaltwelle 25 und damit der Bewegtkontakt 11 durch ein Reinigungssignal derart gesteuert werden, dass der Festkontakt 12 wenigstens einmal von dem Bewegtkontakt 11 angefahren wird, wenn der Festkontakt 12 eine lange Zeit nicht mehr beschaltet worden ist. Durch diese reibenden Relativbewegungen werden Verschmutzungen vom Festkontakt 12 entfernt. Falls der Festkontakt 12 jedoch erst kürzlich beschaltet war, wird keine Reinigung durchgeführt und der Festkontakt 12 direkt von dem Bewegtkontakt 11 angefahren.

Die Verschmutzung der Festkontakte 12 und der Bewegtkontakte 11 erfolgt oft als Fremdschichtbildung durch die Ölbestandteile und die Ölzersetzungsprodukte, die auf Grund von thermischen Einwirkungen entstehen.

In FIG. 4 ist eine bevorzugte Ausführungsform des Vorwählers 13 schematisch dargestellt. Der Vorwähler 13 ist dreiphasig ausgebildet, in FIG. 4 ist jedoch lediglich ein 120°-Segment gezeigt, das einer der drei Phasen zugeordnet ist.

Der Vorwähler 13 ist bei dieser Ausführungsform beispielhaft so ausgebildet, wie es in DE 10 2013 107 549 A1 beschrieben ist.

Der Vorwähler 13 umfasst bei dieser Ausführungsform beispielhaft für jede Phase einen an einer Schaltwelle 25 befestigten Bewegtkontakt 11, der gemäß einer zweiten Ausführungsform ausgebildet ist, und mehrere Festkontakte 12, die gemäß einer zweiten Ausführungsform ausgebildet sind. Auch hier kann beispielsweise die Schaltwelle 25 und damit der Bewegtkontakt 11 durch ein Reinigungssignal derart gesteuert werden, dass der Bewegtkontakt 11, bevor er auf einen Festkontakt 12 umgeschaltet wird, diesen wenn nötig durch wenigstens eine reibende Relativbewegung reinigt.

In FIG. 5 ist eine bevorzugte Ausführungsform eines Lastwählers 14 schematisch dargestellt.

Bei dieser Ausführungsform ist der Lastwähler 14 so ausgebildet, wie es in DE 10 2013 107 550 A1 beschrieben ist.

Der Lastwähler 14 umfasst bei dieser Ausführungsform beispielhaft mehrere an einer Schaltwelle 25 befestigte Bewegtkontakte 11, die gemäß einer dritten Ausführungsform ausgebildet sind, und mehrere Festkontakte 12, die gemäß einer zweiten Ausführungsform ausgebildet sind.

Der Lastwähler 14 dient zum Wählen und Umschalten unter Last in einem Rutsch von dem aktuell stromführenden, mit einem Bewegtkontakt 11 beschalteten Festkontakt 12 auf denjenigen Festkontakt 12, auf den umgeschaltet werden soll, ohne dass vorher ein leistungsloses oder stromloses oder lastfreies Vorwählen stattfindet.

Beim Umschalten wird also ein Bewegtkontakt 11 auf einen Festkontakt 12 unter Last aufgeschaltet. Dabei wird bevorzugt vor dem Umschalten ein Reinigungssignal in Abhängigkeit von wenigstens einem Reinigungsparameter erzeugt und in Abhängigkeit von dem Reinigungssignal eine Reinigung des aktuell stromführenden, beschalteten Festkontaktes 12 durchgeführt. So kann beispielsweise die Schaltwelle 25 und damit der Bewegtkontakt 11 durch das Reinigungssignal derart gesteuert werden, dass der Bewegtkontakt 11 reibend relativ zu dem Festkontakt 12 bewegt wird, ohne dass sich diese voneinander lösen. Durch diese reibenden Relativbewegungen werden Verschmutzungen vom Festkontakt 12 entfernt.

Dies ist beispielsweise dann nötig, wenn der aktuell beschaltete Festkontakt 12 über einen längeren Zeitraum ununterbrochen stromführend ist. Durch den ständig fließenden Strom können Festkontakt 12 und Bewegtkontakt 11 besonders stark erwärmt werden, sodass Ölbestandteile und Ölzersetzungsprodukte eine Verschmutzung und/oder Oxidation und/oder Korrosion der Kontakte 11, 12 verursachen können.

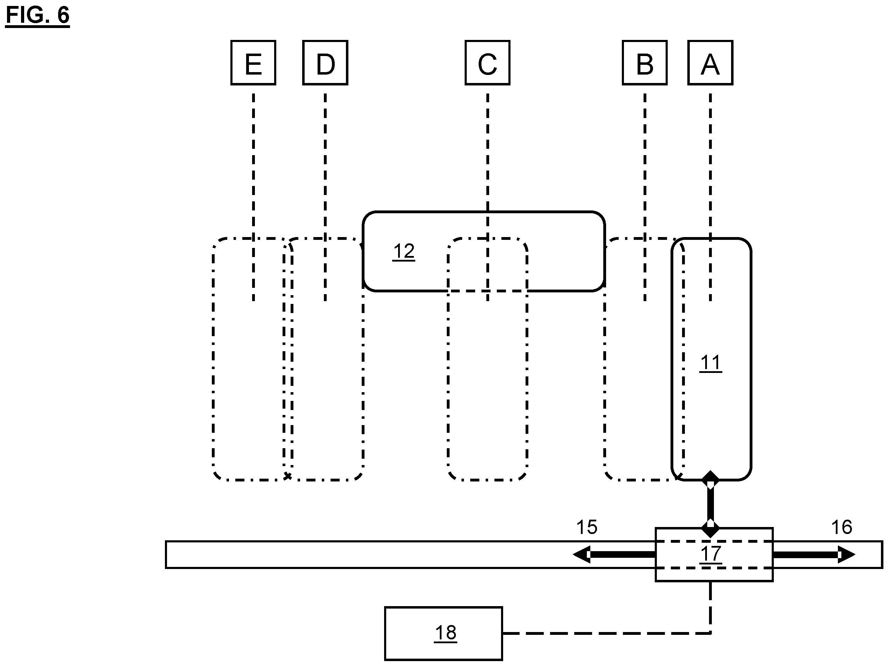

In FIG. 6 ist ein Teil des Feinwählers 10, des Vorwählers 13 oder des Lastwählers 14 schematisch dargestellt. Dieser Teil umfasst einen Festkontakt 12, der gemäß einer vierten Ausführungsform ausgebildet ist, einen Bewegtkontakt 11, der gemäß einer vierten Ausführungsform ausgebildet ist, einen Kontaktantrieb 17 und eine Steuereinrichtung 18. Der Kontaktantrieb 17 umfasst beispielhaft eine Schiene und einen Schlitten, der auf der Schiene verfahrbar gehalten ist und an den Bewegtkontakt 11 und den Motor 22 (FIG. 1, FIG. 2) gekoppelt ist. Die Steuereinrichtung 18 ist mit dem Kontaktantrieb 17 und/oder mit dem Motor 22 verbunden und derart ausgebildet ist, dass sie ein Reinigungssignal erzeugen und an den Kontaktantrieb 17 und/oder Motor 22 senden kann. Der Kontaktantrieb 17 und/oder der Motor 22 ist derart ausgebildet, dass er in Abhängigkeit von dem Reinigungssignal den Bewegtkontakt 11 relativ zum Festkontakt 12 reibend bewegen kann.

Nachfolgend wird die Reinigung des Festkontaktes 12 näher beschrieben.

Anfangs befindet sich der Bewegtkontakt 11 in einer Position A, in der er den Festkontakt 12 nicht berührt. Zum Reinigen erzeugt die Steuereinrichtung 18 das Reinigungssignal und sendet es an den Kontaktantrieb 17 und/oder den Motor 22. Daraufhin bewegt der Kontaktantrieb 17 den Bewegtkontakt 11 in eine erste Richtung, symbolisiert durch den Pfeil 15, bewegt. Eine reibende Bewegung beginnt und/oder erfolgt bereits, wenn der Bewegtkontakt 11 eine Position B erreicht und/oder überschreitet, in der er mit seiner in die Zeichenfläche hinein weisenden Unterseite den Festkontakt 12 an dessen aus der Zeichenfläche heraus weisenden Oberseite berührt. Dann bewegt der Kontaktantrieb 17 den Bewegtkontakt 11 über die Position B hinaus weiter in Richtung 15 bis zu einer Position C hin, die beispielhaft in der Mitte des Festkontaktes 12 liegt. Nach dem Erreichen der Position C kann der Kontaktantrieb 17 den Bewegtkontakt 11 beispielsweise weiter in die erste Richtung 15 bis in eine Position D, in der er sich vom Festkontakt 12 löst und/oder diesen gerade noch berührt, und optional weiter in eine Position E, in der er den Festkontakt 12 nicht berührt, bewegen, oder in die zur ersten Richtung 15 entgegengesetzte Richtung, symbolisiert durch den Pfeil 15, zurück bis zu der Position B bewegen, in der er sich vom Festkontakt 12 löst und/oder diesen gerade noch berührt. Bereits das einmalige Kontaktieren und die dadurch verursachte reibende Bewegung kann den Festkontakt 12 reinigen. Diese Bewegung kann jedoch bei Bedarf beliebig oft wiederholt werden.

Nach dem Abschluss der Reinigung kann der Kontaktantrieb 17 den Bewegtkontakt 11 beispielsweise in die Position A oder E bewegen und dort anhalten, sodass er den Festkontakt 12 nicht berührt. Der Kontaktantrieb 17 kann jedoch den Bewegtkontakt 11 beispielsweise auch in die Position B oder D oder zwischen diese, vorzugsweise in die Position C bewegen und dort anhalten, sodass er den Festkontakt 12 berührt.

Eine weitere Möglichkeit für die Erzeugung der reibenden Bewegung kann dadurch realisiert werden, dass der Kontaktantrieb 17 den Bewegtkontakt 11 zwischen den Positionen B und D abwechselnd in die erste Richtung 15 und die zweite Richtung 16 hin und her bewegt. Dabei bleiben der Bewegtkontakt 11 und der Festkontakt 12 ständig in Kontakt. Der Kontaktantrieb 17 kann den Bewegtkontakt 11 auch derart antreiben, dass er Mikrobewegungen um die Position C herum durchführt.

Die reibende Bewegung, bei der der Bewegtkontakt 11 und der Festkontakt 12 in Kontakt stehen, ermöglichen eine Reinigung im Betrieb des Laststufenschalters, beispielsweise an einem nicht beschalteten oder einem beschalteten Bewegtkontakt 11 des Feinwählers 10 oder des Vorwählers 13 oder des Lastwählers 14.

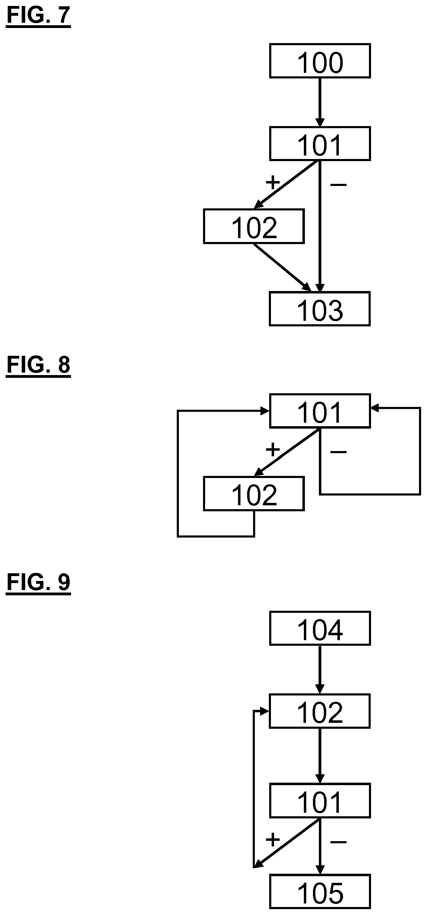

In FIG. 7 ist eine erste Ausführungsform eines Verfahrens zum Reinigen des Laststufenschalters 19 schematisch dargestellt.

Bei dieser Ausführungsform umfasst der Laststufenschalter 19 den Lastumschalter 21 und den Feinwähler 10 der FIG. 3, und umfasst das Verfahren beispielhaft die folgenden Schritte:

| | |
|---|---|
| Schritt 100: | Schaltsignal zum Betätigen des Laststufenschalters |
| Schritt 101: | Überprüfen eines Reinigungsparameters |
| Schritt 102: | Erzeugen eines Reinigungssignals und Reinigung |
| Schritt 103: | Betätigen des Laststufenschalters |

In einem Schritt 100 wird ein Schaltsignal zum Betätigen des Laststufenschalters 19 erzeugt. Dieses Schaltsignal wird beispielsweise von einem Spannungsregler erzeugt, dessen Aufgabe es ist, die Primärspannung oder die Sekundärspannung des Regeltransformators 20 in einem vorbestimmten Spannungsband zu halten. Bei einem Laststufenschalter 19, der einen Lastumschalter 21 und einen Feinwähler 10 umfasst, erfolgt die leistungslose oder stromlose oder lastfreie Vorwahl eines der Festkontakte 12, der mit derjenigen Anzapfung elektrisch leitend verbunden ist, auf die umgeschaltet werden soll, mit Hilfe des Feinwählers 10 und die eigentliche Umschaltung unter Last im Lastumschalter 21. Das Schaltsignal enthält bei dieser Ausführungsform beispielhaft Informationen darüber, welcher Bewegtkontakt 11 des Feinwählers 10 bewegt werden soll und welcher Festkontakt 12 des Feinwählers 10 von diesem zu bewegenden Bewegtkontakt 11 beschaltet werden soll.

Nach Schritt 100 wird in einem Schritt 101 ein Reinigungsparameter überprüft, sodass das Überprüfen in Abhängigkeit von dem Schaltsignal erfolgt. Bei dieser Ausführungsform ist der Reinigungsparameter beispielhaft ein Zeitintervall, das aussagt, wie lange derjenige Bewegtkontakt 11, der gemäß dem Schaltsignal bewegt werden soll, denjenigen Festkontakt 12, der gemäß dem Schaltsignal beschaltet werden soll, nicht beschaltet oder kontaktiert oder berührt hat. Zum Überprüfen wird bei dieser Ausführungsform beispielhaft überprüft, ob der Reinigungsparameter einen vorbestimmten Schwellenwert überschritten hat. Für den JA-Fall (in FIG. 7 durch das Pluszeichen "+"angedeutet), falls also der Reinigungsparameter den Schwellenwert überschritten hat, wird ein Schritt 102 ausgeführt, und für den NEIN-Fall (in FIG. 7 durch das Minuszeichen "-"angedeutet), falls also der Reinigungsparameter den Schwellenwert nicht überschritten hat, wird ein Schritt 103 ausgeführt.

In Schritt 102 wird zunächst ein Reinigungssignal erzeugt. Das Reinigungssignal enthält bei dieser Ausführungsform beispielhaft Informationen darüber, wie oft und in welcher Reihenfolge der Bewegtkontakt 11, der gemäß dem Schaltsignal bewegt werden soll, die Positionen A bis E der FIG. 6 bezogen auf den Festkontakt 12, der gemäß dem Schaltsignal beschaltet werden soll, anfahren soll. Nach dem Erzeugen des Reinigungssignals wird der Bewegtkontakt 11 entsprechend diesen Informationen bewegt und folglich in Abhängigkeit von dem Reinigungssignal relativ zu dem Festkontakt 12 reibend bewegt, sodass die Reinigung ausgeführt wird. Dann wird der Reinigungsparameter auf Null zurückgesetzt und Schritt 103 ausgeführt.

In Schritt 103 wird der Laststufenschalter 19 entsprechend dem Schaltsignal betätigt und die Umschaltung des Laststufenschalters 19 durchgeführt.

Da für den JA-Fall Schritt 102 ausgeführt und folglich das Reinigungssignal erzeugt wird und für den NEIN-Fall Schritt 102 nicht ausgeführt und folglich das Reinigungssignal nicht erzeugt wird, wird das Reinigungssignal in Abhängigkeit von dem Ergebnis der Überprüfung erzeugt.

In FIG. 8 ist ein Beispiel, das nicht zur Erfindung gehört, eines Verfahrens zum Reinigen des Laststufenschalters 19 schematisch dargestellt. Dieses Beispiel ähnelt der ersten Ausführungsform, sodass im Folgenden vor Allem die Unterschiede ausführlicher beschrieben werden.

Bei diesem Beispiel umfasst der Laststufenschalter 19 den Lastwähler 14 der FIG. 5, und umfasst das Verfahren beispielhaft die folgenden Schritte:
Schritt 101: Überprüfen eines Reinigungsparameters
Schritt 102: Erzeugen eines Reinigungssignals und Reinigung
Im Unterschied zu der ersten Ausführungsform entfallen somit die Schritte 100 und 103.

Bei dieser Ausführungsform ist der Reinigungsparameter beispielhaft ein Zeitintervall, das aussagt, wie lange der aktuell stromführende Festkontakt 12 ununterbrochen stromführend ist. Zum Überprüfen wird bei dieser Ausführungsform in Schritt 101 beispielhaft überprüft, ob der Reinigungsparameter einen vorbestimmten Schwellenwert überschritten hat. Für den JA-Fall (in FIG. 8 durch das Pluszeichen "+"angedeutet), falls also der Reinigungsparameter den Schwellenwert überschritten hat, wird Schritt 102 ausgeführt, und für den NEIN-Fall (in FIG. 8 durch das Minuszeichen "-"angedeutet), falls also der Reinigungsparameter den Schwellenwert nicht überschritten hat, wird nach einer vorbestimmten Pause Schritt 101 ausgeführt.

Bei dieser Ausführungsform enthält das in Schritt 102 erzeugte Reinigungssignal beispielhaft Informationen darüber, wie oft und wie weit der aktuell stromführende Bewegtkontakt 11, der den aktuell stromführenden Festkontakt 12 beschaltet und aktuell die Position C der FIG. 6 relativ zu diesem einnimmt, ausgehend von der Position C in die erste Richtung 15 und die zweite Richtung 16 bewegt werden soll, ohne jedoch die Positionen B und D zu erreichen, sodass er ständig in Kontakt mit dem Festkontakt 12 bleibt. Nach dem Erzeugen des Reinigungssignals wird der Bewegtkontakt 11 entsprechend diesen Informationen bewegt und folglich in Abhängigkeit von dem Reinigungssignal relativ zu dem Festkontakt 12 reibend bewegt, sodass die Reinigung ausgeführt wird. Dann wird der Reinigungsparameter auf Null zurückgesetzt und nach einer vorbestimmten Pause Schritt 101 ausgeführt.

In FIG. 9 ist ein Beispiel, das nicht zur Erfindung gehört, eines Verfahrens zum Reinigen des Laststufenschalters 19 schematisch dargestellt. Das Beispiel ähnelt der zweiten Ausführungsform, sodass im Folgenden vor Allem die Unterschiede ausführlicher beschrieben werden.

Bei diesem Beispiel umfasst der Laststufenschalter 19 den Lastumschalter 21 und den Feinwähler 10 der FIG. 3, und umfasst das Verfahren beispielhaft die folgenden Schritte:
Schritt 104: Trennen des Regeltransformator 20 vom Wechselstromnetz 26
Schritt 102: Erzeugen eines Reinigungssignals und Reinigung
Schritt 101: Überprüfen von Reinigungsparametern
Schritt 105: Ende des Verfahrens

Vor einer Wartung oder Reparatur wird üblicherweise in einem Schritt 104 der Regeltransformator 20, in den der Laststufenschalter 19 eingebaut ist, vom Wechselstromnetz 26 getrennt. Danach kann in Schritt 102 die Reinigung des Laststufenschalters 19 mit dem vorgeschlagenen Verfahren durchgeführt werden. Hierzu kann in der einfachsten Ausführungsform eine Reinigung derart durchgeführt werden, dass jeder Bewegtkontakt 11 mehrere Male jeden der ihm zugeordneten Festkontakte 12 einzeln anfährt und auf diesen wenigstens einmal aufschaltet. Durch diese Relativbewegungen werden Verschmutzungen von den Festkontakten 12, aber auch von den Bewegtkontakten 11 entfernt. Die Reinigung kann dabei ohne Überprüfung irgendwelcher Reinigungsparameter erfolgen.

Um die Reinigungswirkung zu überprüfen, wird nach der Reinigung Schritt 101 ausgeführt. In Schritt 101 werden als Reinigungsparameter die Widerstandswerte der elektrischen Kontaktwiderstände zwischen jedem Bewegtkontakt 11 und jedem der ihm zugeordneten Festkontakte 12 ermittelt und überprüft, ob einer der Reinigungsparameter einen vorbestimmten Schwellenwert überschritten hat. Für den JA-Fall (in FIG. 9 durch das Pluszeichen "+" angedeutet) wird Schritt 102 ausgeführt, und für den NEIN-Fall (in FIG. 9 durch das Minuszeichen "-"angedeutet) wird Schritt 105 ausgeführt.

In Schritt 105 wird das Verfahren beendet und beispielsweise ein Endesignal erzeugt.

Es ist auch möglich, nur diejenigen Festkontakte 12 zu reinigen, deren Widerstandswert zu hoch war. Der Bewegtkontakt 11 kann dann die betreffenden Festkontakte 12 einzeln anfahren und reinigen. Auch hier kann im Anschluss Schritt 101 wiederholt werden.

Weiterhin können die Reinigungsparameter während des Betriebs ermittelte Daten sein, wie es beispielsweise die bereits erwähnten Zeitintervalle sind. Diese können beispielsweise aussagen, welche Festkontakte 12 seit einem bestimmten Zeitintervall nicht beschaltet wurden oder für ein bestimmtes Zeitintervall stromführend waren und folglich gereinigt werden sollten.

### BEZUGSZEICHEN

- 10: Feinwähler
- 11: Bewegtkontakt
- 12: Festkontakt
- 13: Vorwähler
- 14: Lastwähler
- 15: erste Richtung
- 16: zweite Richtung
- 17: Kontaktantrieb
- 18: Steuereinrichtung
- 19: Laststufenschalter
- 20: Regeltransformator
- 21: Lastumschalter
- 22: Motor
- 23: Regelwicklung
- 24: Leitung
- 25: Schaltwelle
- 26: Wechselstromnetz
- 100: Schritt
- 101: Schritt
- 102: Schritt
- 103: Schritt
- 104: Schritt
- A, B, C, D, E: Positionen von 11

## Patentansprüche

1. **Verfahren** zum Reinigen eines Laststufenschalters (19) in einem Regeltransformator (20), wobei
- der Laststufenschalter (19) einen Bewegtkontakt (11) und einen Festkontakt (12) umfasst;
- ein Schaltsignal zum Betätigen und umschalten des Laststufenschalters (19) erzeugt wird um eine Primärspannung oder eine Sekundärspannung des Regeltransformators (20) in einem vorbestimmten Spannungsband zu halten;
- wenigstens ein Reinigungsparameter in Abhängigkeit von dem Schaltsignal überprüft wird;
- ein Reinigungssignal in Abhängigkeit von dem Ergebnis der Überprüfung erzeugt wird;
- in Abhängigkeit von dem Reinigungssignal der Bewegtkontakt (11) relativ zum Festkontakt (12) reibend bewegt wird;
- nach dem Reinigen der Laststufenschalter (19) entsprechend dem Schaltsignal betätigt und umgeschaltet wird.

2. Verfahren nach Anspruch 1, wobei
- das Reinigungssignal von wenigstens einem Reinigungsparameter abhängt.

3. Verfahren nach einem der vorigen Ansprüche, wobei
- wenigstens einer der Reinigungsparameter
• ein erstes Zeitintervall ist, das aussagt, wie lange der Bewegtkontakt (11) ununterbrochen stromführend ist, oder
• ein zweites Zeitintervall ist, das aussagt, wie lange der Bewegtkontakt (11) seit seiner letzten Reinigung stromführend ist, oder
• ein drittes Zeitintervall ist, das aussagt, wie lange der Festkontakt (12) ununterbrochen stromführend ist, oder
• ein viertes Zeitintervall ist, das aussagt, wie lange der Festkontakt (12) seit seiner letzten Reinigung stromführend ist, oder
• ein fünftes Zeitintervall ist, das aussagt, wie lange der Bewegtkontakt (11) ununterbrochen stromlos ist, oder
• ein sechstes Zeitintervall ist, das aussagt, wie lange der Bewegtkontakt (11) seit seiner letzten Reinigung stromlos ist, oder
• ein siebentes Zeitintervall ist, das aussagt, wie lange der Festkontakt (12) ununterbrochen stromlos ist, oder
• ein achtes Zeitintervall ist, das aussagt, wie lange der Festkontakt (12) seit seiner letzten Reinigung stromlos ist, oder
• ein neuntes Zeitintervall ist, das aussagt, wie lange der Bewegtkontakt (11) den Festkontakt (12) ununterbrochen stromlos kontaktiert hat, oder
• ein zehntes Zeitintervall ist, das aussagt, wie lange der Bewegtkontakt (11) den Festkontakt (12) nicht kontaktiert hat, oder
• ein Widerstandswert ist, der aussagt, wie groß der elektrische Kontaktwiderstand zwischen dem Festkontakt (12) und dem auf diesen aufgeschalteten Bewegtkontakt (11) ist.

4. Verfahren nach einem der vorigen Ansprüche, wobei
- der Laststufenschalter (19) einen Lastumschalter (21) und einen Feinwähler (10) umfasst, der den Bewegtkontakt (11) und den Festkontakt (12) umfasst;
- das Betätigen des Laststufenschalters (19) derart erfolgt, dass zuerst der Bewegtkontakt (11) auf den Festkontakt (12) aufgeschaltet wird oder auf dem Festkontakt (12) aufgeschaltet bleibt, und dass dann der Lastumschalter (21) betätigt wird.

5. Verfahren nach einem der vorigen Ansprüche, wobei
- der Bewegtkontakt (11) und/oder der Festkontakt (12) Teil eines Lastwählers (14), Feinwählers (10), Grobstufenwählers, Wenders oder Vorwählers (13) in dem Laststufenschalter (19) ist.

6. Verfahren nach einem der vorigen Ansprüche, wobei
- der Festkontakt (12) als Stufenkontakt oder Ableitkontakt ausgebildet ist.

7. Verfahren nach einem der vorigen Ansprüche, wobei
- während der reibenden Bewegung der Bewegtkontakt (11) nicht vom Festkontakt (12) gelöst wird.

8. Verfahren nach einem der vorigen Ansprüche, wobei
- vor und/oder nach der reibenden Bewegung der Bewegtkontakt (11) vom Festkontakt (12) mindestens einmal gelöst wird.

9. Verfahren nach einem der vorigen Ansprüche, wobei
- die reibende Bewegung derart ausgeführt wird, dass sich der Bewegtkontakt (11) vom Festkontakt (12) mindestens einmal löst.

10. Verfahren nach einem der vorigen Ansprüche, wobei
- während des Erzeugens des Reinigungssignals und/oder während des Bewegens des Bewegtkontaktes (11) und/oder während des Überprüfens des Reinigungsparameters der Regeltransformator (20) an ein Wechselstromnetz (26) angeschlossen ist.

11. **Laststufenschalter** (19) für einen Regeltransformator (20), umfassend
- einen Bewegtkontakt (11) (11) und einen Festkontakt (12);
- einen Kontaktantrieb (17), der an den Bewegtkontakt (11) gekoppelt ist;
- eine Steuereinrichtung (18), die mit dem Kontaktantrieb (17) verbunden ist und derart ausgebildet ist, dass sie
• ein Schaltsignal zum Betätigen und umschalten des Laststufenschalters (19) erzeugen kann um eine Primärspannung oder eine Sekundärspannung des Regeltransformators (20) in einem vorbestimmten Spannungsband zu halten;
• wenigstens einen Reinigungsparameter in Abhängigkeit von dem Schaltsignal überprüfen kann;
• ein Reinigungssignal in Abhängigkeit von dem Ergebnis der Überprüfung erzeugen und an den Kontaktantrieb (17) senden kann;
wobei
- der Kontaktantrieb (17) derart ausgebildet ist, dass er
• in Abhängigkeit von dem Reinigungssignal den Bewegtkontakt (11) relativ zum Festkontakt (12) reibend bewegen kann;
- die Steuereinrichtung (18) derart ausgebildet ist, dass sie
• nach dem Reinigen den Laststufenschalter (19) entsprechend dem Schaltsignal betätigen und umschalten kann.

12. Laststufenschalter (19) nach dem Anspruch 11, wobei
- wenigstens einer der Reinigungsparameter
• ein erstes Zeitintervall ist, das aussagt, wie lange der Bewegtkontakt (11) ununterbrochen stromführend ist, oder
• ein zweites Zeitintervall ist, das aussagt, wie lange der Bewegtkontakt (11) seit seiner letzten Reinigung stromführend ist, oder
• ein drittes Zeitintervall ist, das aussagt, wie lange der Festkontakt (12) ununterbrochen stromführend ist, oder
• ein viertes Zeitintervall ist, das aussagt, wie lange der Festkontakt (12) seit seiner letzten Reinigung stromführend ist, oder
• ein fünftes Zeitintervall ist, das aussagt, wie lange der Bewegtkontakt (11) ununterbrochen stromlos ist, oder
• ein sechstes Zeitintervall ist, das aussagt, wie lange der Bewegtkontakt (11) seit seiner letzten Reinigung stromlos ist, oder
• ein siebentes Zeitintervall ist, das aussagt, wie lange der Festkontakt (12) ununterbrochen stromlos ist, oder
• ein achtes Zeitintervall ist, das aussagt, wie lange der Festkontakt (12) seit seiner letzten Reinigung stromlos ist, oder
• ein neuntes Zeitintervall ist, das aussagt, wie lange der Bewegtkontakt (11) den Festkontakt (12) ununterbrochen stromlos kontaktiert hat, oder
• ein zehntes Zeitintervall ist, das aussagt, wie lange der Bewegtkontakt (11) den Festkontakt (12) nicht kontaktiert hat, oder
• ein Widerstandswert ist, der aussagt, wie groß der elektrische Kontaktwiderstand zwischen dem Festkontakt (12) und dem auf diesen aufgeschalteten Bewegtkontakt (11) ist.

13. Laststufenschalter (19) nach einem der vorigen Ansprüche, umfassend
- einen Lastumschalter (21) und einen Feinwähler (10), der den Bewegtkontakt (11) und den Festkontakt (12) umfasst;
wobei
- die Steuereinrichtung (18) derart ausgebildet ist, dass sie zum Betätigen des Laststufenschalters (19)
• zuerst den Kontaktantrieb (17) derart ansteuert, dass dieser den Bewegtkontakt (11) auf den Festkontakt (12) aufschaltet oder auf dem Festkontakt (12) aufgeschaltet lässt,
• und dann den Lastumschalter (21) derart ansteuert, dass dieser umschaltet.

14. Laststufenschalter (19) nach einem der vorigen Ansprüche, wobei
- der Bewegtontakt und/oder der Festkontakt (12) Teil eines Lastwählers (14), Feinwählers (10), Grobstufenwählers, Wenders oder Vorwählers (13) in dem Laststufenschalter (19) ist.

15. Laststufenschalter (19) nach einem der vorigen Ansprüche, wobei
- der Festkontakt (12) als Stufenkontakt oder Ableitkontakt ausgebildet ist.

16. Laststufenschalter (19) nach einem der vorigen Ansprüche, wobei
- der Kontaktantrieb (17) derart ausgebildet ist, dass er
• während der reibenden Bewegung den Bewegtkontakt (11) nicht vom Festkontakt (12) lösen kann; und/oder
• vor und/oder nach der reibenden Bewegung den Bewegtkontakt (11) vom Festkontakt (12) mindestens einmal lösen kann.

17. Laststufenschalter (19) nach einem der vorigen Ansprüche, wobei
- der Kontaktantrieb (17) derart ausgebildet ist, dass er
• die reibende Bewegung derart ausführen kann, dass sich der Bewegtkontakt (11) vom Festkontakt (12) mindestens einmal löst.

## Claims

1. Method of cleaning an on-load tap changer (19) in a regulating transformer (20), wherein
- the on-load tap changer (19) comprises a moved contact (11) and a fixed contact (12);
- a switching signal for actuating and switching over the on-load tap changer (19) is generated in order to keep a primary voltage or a secondary voltage of the regulating transformer (20) in a predetermined voltage band;
- at least one cleaning parameter is checked in dependence on the switching signal;
- a cleaning signal is generated in dependence on the result of the check;
- the moved contact is frictionally moved relative (11) to the fixed contact (12) in dependence on the cleaning signal; and
- the on-load tap changer (19) is actuated and switched over in correspondence with the switching signal after the cleaning.

2. Method according to claim 1, wherein
- the cleaning signal depends on at least one cleaning parameter.

3. Method according to one of the preceding claims, wherein
- at least one of the cleaning parameters is
- a first time period which expresses how long the moved contact (11) has been conducting current without interruption or
- a second time period which expresses how long the moved contact (11) has been conducting current since its last cleaning or
- a third time period which expresses how long the fixed contact (12) has been conducting current without interruption or
- a fourth time period which expresses how long the fixed contact (12) has been conducting current since its last cleaning or
- a fifth time period which expresses how long the moved contact (11) has been free of current without interruption or
- a sixth time period which expresses how long the moved contact (11) has been free of current since its last cleaning or
- a seventh time period which expresses how long the fixed contact (12) has been free of current without interruption or
- an eighth time period which expresses how long the fixed contact (12) has been free of current since its last cleaning or
- a ninth time period which expresses how long the moved contact (11) free of current has contacted the fixed contact (12) without interruption or
- a tenth time period which expresses how long the moved contact (11) has not contacted the fixed contact (12) or
- a resistance value which expresses the level of electrical contact resistance between the fixed contact (12) and the moved contact (11) connected therewith.

4. Method according to any one of the preceding claims, wherein
- the on-load tap changer (19) comprises a load changeover switch (21) and a fine selector (10), which comprises the moved contact (11) and the fixed contact (12); and
- actuation of the on-load tap changer (19) is carried out in such a way that initially the moved contact (11) is connected with the fixed contact (12) or remains connected with the fixed contact (12) and that then the load changeover switch (21) is actuated.

5. Method according to any one of the preceding claims, wherein
- the moved contact (11) and/or the fixed contact (12) is or are part of a load selector (14), fine selector (10), coarse tap selector, reverser or preselector (13) in the on-load tap changer (19).

6. Method according to any one of the preceding claims, wherein
- the fixed contact (12) is constructed as a tap contact or diverter contact.

7. Method according to any one of the preceding claims, wherein
- during the frictional movement the moved contact (11) is not detached from the fixed contact (12).

8. Method according to any one of the preceding claims, wherein
- before and/or after the frictional movement the moved contact (11) is detached at least once from the fixed contact (12).

9. Method according to any one of the preceding claims, wherein
- the frictional movement is carried out in such a way that the moved contact (11) is detached at least once from the fixed contact (12).

10. Method according to any one of the preceding claims, wherein
- during generation of a cleaning signal and/or during movement of the moved contact (11) and/or during checking of the cleaning parameter the regulating transformer (20) is connected with an alternating current mains (26).

11. On-load tap changer (19) for a regulating transformer (20), comprising
- a moved contact (11) and a fixed contact (12);
- a contact drive (17) coupled to the moved contact (11); and
- a control device (18) connected with the contact drive (17) and so constructed that it
- can generate a switching signal for actuating and switching over the on-load tap changer (19) so as to keep a primary voltage or a secondary voltage of the regulating transformer (20) in a predetermined voltage band;
- can check at least one cleaning parameter in dependence on the switching signal; and
- can generate a cleaning signal in dependence on the result of the check and transmit it to the contact drive;
wherein
- the contact drive (17) is so constructed that
- it can frictionally move the moved contact (11) relative to the fixed contact (12) in dependence on the cleaning signal; and
- the control device (18) is so constructed that it can
- actuate and switch over the on-load tap changer (19) in correspondence with the switching signal after the cleaning.

12. On-load tap changer (19) according to claim 11, wherein
- at least one of the cleaning parameters is
- a first time period which expresses how long the moved contact (11) has been conducting current without interruption or
- a second time period which expresses how long the moved contact (11) has been conducting current since its last cleaning or
- a third time period which expresses how long the fixed contact (12) has been conducting current without interruption or
- a fourth time period which expresses how long the fixed contact (12) has been conducting current since its last cleaning or
- a fifth time period which expresses how long the moved contact (11) has been free of current without interruption or
- a sixth time period which expresses how long the moved contact (11) has been free of current since its last cleaning or
- a seventh time period which expresses how long the fixed contact (12) has been free of current without interruption or
- an eighth time period which expresses how long the fixed contact (12) has been free of current since its last cleaning or
- a ninth time period which expresses how long the moved contact (11) free of current has contacted the fixed contact (12) without interruption or
- a tenth time period which expresses how long the moved contact (11) has not contacted the fixed contact (12) or
- a resistance value which expresses the level of electrical contact resistance between the fixed contact (12) and the moved contact (11) connected therewith.

13. On-load tap changer (19) according to one of the preceding tap-changer claims, comprising
- a load changeover switch (21) and a fine selector (10), which comprises the moved contact (11) and the fixed contact (12);
wherein
- the control device (18) is so constructed that for actuation of the on-load tap changer (19) it
- initially activates the contact drive (17) in such a way that this connects the moved contact (11) with the fixed contact (12) or leaves it connected with the fixed contact (12) and
- then activates the load changeover switch (21) in such a way that this switches over.

14. On-load tap changer (19) according to any one of the preceding tap-changer claims, wherein
- the moved contact and/or the fixed contact (12) is or are part of a load selector (14), fine selector (10), coarse tap selector, reverser or preselector (13) in the on-load tap changer (19).

15. On-load tap changer (19) according to any one of the preceding tap-changer claims, wherein
- the fixed contact (12) is constructed as a tap contact or diverter contact.

16. On-load tap changer (19) according to any one of the preceding tap-changer claims, wherein
- the contact drive (17) is so constructed that it
- cannot detach the moved contact (11) from the fixed contact (12) during the frictional movement; and/or
- can detach the moved contact (11) from the fixed contact (12) at least once before and/or after the frictional movement.

17. On-load tap changer (19) according to any one of the preceding tap-changer claims, wherein
- the contact drive (17) is so constructed that it
- can undertake the frictional movement in such a way that the moved contact (11) detaches from the fixed contact (12) at least once.

## Revendications

1. Procédé de nettoyage d'un commutateur à gradins en charge (19) dans un transformateur de régulation (20) selon lequel :
- le commutateur à gradins en charge (19) comprend un contact mobile (11) et un contact fixe (12),
- un signal de commutation permettant d'actionner et de commuter le commutateur à gradins en charge (19) est produit pour maintenir la tension primaire ou la tension secondaire du transformateur de régulation (20) dans une plage de tension prédéfinie,
- au moins un paramètre de nettoyage est contrôlé en fonction du signal de commutation,
- un signal de nettoyage est produit en fonction du résultat du contrôle,
- en fonction du signal de nettoyage, le contact mobile (11) est déplacé par friction par rapport au contact fixe (12),
- après le nettoyage, le commutateur à gradins en charge (19) est actionné et commuté conformément au signal de commutation.

2. Procédé conforme à la revendication 1,
selon lequel le signal de nettoyage dépend d'au moins un paramètre de nettoyage.

3. Procédé conforme à l'une des revendications précédentes,
- selon lequel au moins l'un des paramètres de nettoyage :
• est un premier intervalle de temps qui indique la durée pendant laquelle le contact mobile (11) est continuellement sous tension, ou
• est un second intervalle de temps qui indique la durée pendant laquelle le contact mobile (11) est sous tension depuis son dernier nettoyage, ou
• est un troisième intervalle de temps qui indique la durée pendant laquelle le contact fixe (12) est continuellement sous tension, ou
• est un quatrième intervalle de temps qui indique la durée pendant laquelle le contact fixe (12) est sous tension depuis son dernier nettoyage, ou
• est un cinquième intervalle de temps qui indique la durée pendant laquelle le contact mobile (11) est continuellement hors tension, ou
• est un sixième intervalle de temps qui indique la durée pendant laquelle le contact mobile (11) est hors tension depuis son dernier nettoyage, ou
• est un septième intervalle de temps qui indique la durée pendant laquelle le contact fixe (12) est continuellement hors tension, ou
• est un huitième intervalle de temps qui indique la durée pendant laquelle le contact fixe (12) est hors tension depuis son dernier nettoyage, ou
• est un neuvième intervalle de temps qui indique la durée pendant laquelle le contact mobile (11) a été continuellement en contact hors tension avec le contact fixe (12), ou
• est un dixième intervalle de temps qui indique la durée pendant laquelle le contact mobile (11) n'a pas été en contact avec le contact fixe (12), ou
• est une valeur de résistance qui indique la valeur de la résistance de contact électrique entre le contact fixe (12) et le contact mobile (11) branché sur celui-ci.

4. Procédé conforme à l'une des revendications précédentes,
selon lequel
- le commutateur à gradins en charge (19) comporte un disjoncteur (21) et un sélecteur fin (10), qui comporte le contact mobile (11) et le contact fixe (12),
- l'actionnement du commutateur à gradins en charge (19) est mis en œuvre de sorte que, le contact mobile (11) soit tout d'abord branché sur le contact fixe (12), ou reste branché sur le contact fixe (12), et le disjoncteur (21) est ensuite actionné.

5. Procédé conforme à l'une des revendications précédentes,
selon lequel le contact mobile (11) et/ou le contact fixe (12) est(sont) une partie d'un sélecteur de charge (14), d'un sélecteur fin (10), d'un commutateur à gradins grossiers, d'un convertisseur ou d'un présélecteur (13) situé dans le commutateur à gradin en charge (19).

6. Procédé conforme à l'une des revendications précédentes,
selon lequel le contact fixe (12) est réalisé sous la forme d'un contact à gradins ou d'un contact de décharge.

7. Procédé conforme à l'une des revendications précédentes,
selon lequel pendant le déplacement par friction le contact mobile (11) n'est pas séparé du contact fixe (12).

8. Procédé conforme à l'une des revendications précédentes,
selon lequel avant et/ou après le déplacement par friction le contact mobile (11) est séparé au moins une fois du contact fixe (12).

9. Procédé conforme à l'une des revendications précédentes,
selon lequel le déplacement par friction est effectué de sorte que le contact mobile (11) se séparé au moins une fois du contact fixe (12).

10. Procédé conforme à l'une des revendications précédentes,
selon lequel pendant la production du signal de nettoyage et/ou pendant le déplacement du contact mobile (11), et/ou pendant le contrôle du paramètre de nettoyage, le transformateur de régulation (20) est branché sur le réseau de courant alternatif (26).

11. Commutateur à gradins en charge (19) destiné à un transformateur de régulation (20) comprenant :
- un contact mobile (11) (11) et un contact fixe (12),
- un entraînement de contact (17) qui est couplé au contact mobile (11),
- un dispositif de commande (18) qui est relié à l'entraînement de contact (17) et est réalisé de sorte qu' :
• il puisse produire un signal de commutation pour actionner et commuter le commutateur à gradins en charge (19) pour maintenir la tension primaire ou la tension secondaire du transformateur de régulation (20) dans une plage de tension prédéfini,
• il puisse contrôler au moins un paramètre de nettoyage en fonction du signal de commutation,
• il puisse produire un signal de nettoyage en fonction du résultat du contrôle et le transmettre à l'entraînement de contact (17),
- l'entraînement de contact (17) étant réalisé de sorte qu' :
• il puisse déplacer par friction le contact mobile (11) par rapport au contact fixe (12) en fonction du signal de nettoyage,
- le dispositif de commande (18) étant réalisé de sorte qu'il puisse, après le nettoyage, actionner et commuter le commutateur à gradins en charge (19) conformément au signal de commutation.

12. Commutateur à gradin en charge (19) conforme à la revendication 11,
- selon lequel au moins l'un des paramètres de nettoyage :
• est un premier intervalle de temps qui indique la durée pendant laquelle le contact mobile (11) est continuellement sous tension, ou
• est un second intervalle de temps qui indique la durée pendant laquelle le contact mobile (11) est sous tension depuis son dernier nettoyage, ou
• est un troisième intervalle de temps qui indique la durée pendant laquelle le contact fixe (12) est continuellement sous tension, ou
• est un quatrième intervalle de temps qui indique la durée pendant laquelle le contact fixe (12) est sous tension depuis son dernier nettoyage, ou
• est un cinquième intervalle de temps qui indique la durée pendant laquelle le contact mobile (11) est continuellement hors tension, ou
• est un sixième intervalle de temps qui indique la durée pendant laquelle le contact mobile (11) est hors tension depuis son dernier nettoyage, ou
• est un septième intervalle de temps qui indique la durée pendant laquelle le contact fixe (12) est continuellement hors tension, ou
• est un huitième intervalle de temps qui indique la durée pendant laquelle le contact fixe (12) est hors tension depuis son dernier nettoyage, ou
• est un neuvième intervalle de temps qui indique la durée pendant laquelle le contact mobile (11) a été continuellement en contact hors tension avec le contact fixe (12), ou
• est un dixième intervalle de temps qui indique la durée pendant laquelle le contact mobile (11) n'a pas été en contact avec le contact fixe (12), ou
• est une valeur de résistance qui indique la valeur de la résistance de contact électrique entre le contact fixe (12) et le contact mobile (11) branché sur celui-ci.

13. Commutateur à gradins en charge (19) conforme à l'une des revendications précédentes,
comprenant :
- un disjoncteur de charge (21) et un sélecteur fin (10) qui comporte le contact mobile (11) et le contact fixe (12),
- le dispositif de commande (18) étant réalisé de sorte que, pour permettre d'actionner le commutateur à gradins en charge (19),
• il commande tout d'abord l'actionnement de contact (17) de sorte que celui-ci branche le contact mobile (11) sur le contact fixe (12) ou le laisse branché sur le contact fixe (12), et
• commande ensuite le commutateur de charge (21) pour le brancher.

14. Commutateur à gradins en charge (19) conforme à l'une des revendications précédentes,
dans lequel le contact mobile et/ou le contact fixe (12) est(sont) une partie d'un sélecteur de charge (14) d'un sélecteur fin (10) d'un commutateur à gradins grossiers, d'un convertisseur ou d'un présélecteur (13) situé dans le commutateur à gradin en charge (19).

15. Commutateur à gradin en charge (19) conforme à l'une des revendications précédentes,
dans lequel
le contact fixe (12) est réalisé sous la forme d'un contact à gradins ou d'un contact de décharge.

16. Commutateur à gradins en charge (19) conforme à l'une des revendications précédentes,
dans lequel :
- l'entraînement de contact (17) est réalisé de sorte que :
• pendant le déplacement par friction il ne puisse pas séparer le contact mobile (11) du contact fixe (12),
• avant et/ou après le déplacement par friction il puisse séparer au moins une fois le contact mobile (11) du contact fixe (12).

17. Commutateur à gradins en charge (19) conforme à l'une des revendications précédentes,
dans lequel
- l'entraînement de contact (17) est réalisé de sorte qu' :
• il puisse mettre en œuvre le déplacement par friction pour que le contact mobile (11) se sépare au moins une fois du contact fixe (12).
